## Europäisches Patentamt
## European Patent Office
## Office européen des brevets

(19)

(11) Veröffentlichungsnummer: **0 150 382**
**B1**

(12) **EUROPÄISCHE PATENTSCHRIFT**

(45) Veröffentlichungstag der Patentschrift: **13.06.90**

(21) Anmeldenummer: **84115230.9**

(22) Anmeldetag: **12.12.84**

(51) Int. Cl.⁵: **B 61 L 25/04,** G 01 S 13/02, G 08 G 1/123

(54) Informationsübertragungssystem.

(30) Priorität: **18.01.84 DE 3401517**

(43) Veröffentlichungstag der Anmeldung:
**07.08.85 Patentblatt 85/32**

(45) Bekanntmachung des Hinweises auf die
Patenterteilung:
**13.06.90 Patentblatt 90/24**

(84) Benannte Vertragsstaaten:
**AT CH DE LI NL SE**

(56) Entgegenhaltungen:
EP-A-0 111 591
DE-A-3 015 437
DE-A-3 027 981

IEEE TRANSACTIONS ON VEHICULAR
TECHNOLOGY, Band VT-23, Nr. 2, Mai 1974,
Seiten 44-54, New York, US; J.N. CONSTANT:
"Microwave automatic vehicle identification
(MAVI) system"

(73) Patentinhaber: **ANT Nachrichtentechnik GmbH**
**Gerberstrasse 33**
**D-7150 Backnang (DE)**

(72) Erfinder: **Steinhart, Rudolf, Dr. Dr.-Ing.**
**Untere Au 10**
**D-7150 Backnang (DE)**
Erfinder: **Zappe, Helmut, Dipl.-Ing.**
**Steinbacher Strasse 11**
**D-7159 Auenwald (DE)**

**Beschreibung**

Die vorliegende Erfindung betrifft ein Informationsübertragungssystem, bestehend aus einer Abfrageeinheit und einer Antworteinheit, wobei die Abfrageeinheit Trägersignale aussendet, welche die Antworteinheit, wenn sie die Abfrageeinheit passiert, empfängt, frequenzmäßig mischt und das Mischprodukt nach Modulation mit der in der Antworteinheit abgespeicherten Information wieder an die Abfrageeinheit zurücksendet, die das modulierte Mischprodukt empfängt und demoduliert.

Ein derartiges Inforamtionssystem, wie es aus der DE—30 27 981 bekannt ist, kann z.B. dazu verwendet werden, um Informationen, wie etwa Entfernungsangaben oder höchstzulässige Geschwindigkeiten, von einer Gleisstrecke an Züge zu übermitteln. Um beispielsweise im Rangierbetrieb die Waggons in einer gewünschten Reihenfolge zusammenzustellen, wird an jedem Waggon eine Antworteinheit angebracht, in der alle wissenswerten Daten des jeweiligen Waggons abgespeichert sind. An der Schienenstrecke ist eine Abfrageeinheit fest installiert, welche die aus den Antworteinheiten herausgelesenen Daten an einen Zentralrechner übermittelt. Der Zentralrechner, der die Reihenfolge der Waggons und deren Bestimmungsbahnhöfe kennt, kann nun dementsprechend die Weichen steuern, so daß die richtige Aneinanderreihung der Waggons erfolgt.

Neben der Organisation und Steuerung von gleisgebundenen Fahrzeugen läßt sich dieses Informationsübertragungssystem z.B. auch zur Regelung des Straßenverkehrs ausnutzen. Die Fahrzeuge würden in diesem Fall mit Abfrageeinheiten bestückt, die beim Vorbeifahren aus an den Straßen installierten Antworteinheiten Informationen über Ort, Verkehrsdichte etc. herauslesen.

Überall, wo es um die Organisation von mobilen Gütern geht, erweist sich eine solche Informationsübertragungseinrichtung als zweckmäßig.

Bei dem aus der DE—30 27 981 bekannten Informationsübertragungssystem werden von der Abfrageeinheit zwei Trägersignale an die Antworteinheit ausgesendet. Beim Mischvorgang in der Antworteinheit entsteht aus diesen zwei Trägersignalen ein für die Modulation mit der Information geeignetes Mischprodukt, dessen Frequenz-Abstand von den zwei Trägersignalen sehr groß ist. Die Frequenzen der beiden Trägersignale und die des Mischprodukts fallen wegen ihrer zu großen Abstände nicht in den Übertragungsfrequenzbereich eines einzigen Hohlleiters, der wegen seines hohen Wirkungsgrades bei der Leistungsübertragung zweckmäßigerweise, z.B. in Form eines Horns, auf Seiten der Abfrage- und der Antworteinheit als Antenne eingesetzt wird. Es müßten daher auf jeder Seite eine Empfangsantenne und zusätzlich eine eigene Sendeantenne vorgesehen werden. Zwei Antennen machen aber die Antworteinheit, welche sehr flexible an beliebigen beweglichen Objekten einsetzbar sein soll, unhandlich.

Der Erfindung liegt nun die Aufgabe zugrunde, ein Informationsübertragungssystem der eingangs genannten Art anzugeben, bei dem insbesondere die Antworteinheit mit möglichst geringem Schaltungsaufwand realisiert ist und durch eine kompakte Bauweise sehr flexibel hindhabbar ist.

Erfindungsgemäß wird diese Aufgabe dadurch gelöst, daß die Abfrageeinheit mindestens drei Trägersignale aussendet, die im Übertragungsfrequenzband eines Hohlleiters liegen, und daß ein Mischer in der Antworteinheit ein sich aus all diesen Trägersignalen zusammensetzendes Mischprodukt bildet.

Zweckmäßige Ausführungen der Erfindung gehen aus den Unteransprüchen hervor.

Dadurch, daß der Anworteinheit mehrere Träger unterschiedlicher Frequenzen übermittelt werden, mit denen der Umsetzer in der Antworteinrichtung gespeist wird, ist keine eigene Oszillatorschaltung, zur Versorgung des Umsetzers mit einem Trägersignal erforderlich.

Vorteilhaft ist auch die Ausnutzung der Trägersignale zur Energieversorgung, der Antworteinheit. Sie kommt dann ohne eigene Betriebsversorgung aus und ist nicht auf eine an ihrem Installationsort anzuordnende Energiequelle angewiesen.

Anhand eines in der Zeichnung dargestellten Ausführungsbeispiels wird nun die Erfindung näher erläutert. Es zeigen:

Fig. 1 ein Informationsübertragungssystem,

Fig. 2 einen Mischer und Amplitudenmodulator und

Fig. 3 die Kennlinie der Mischerdiode.

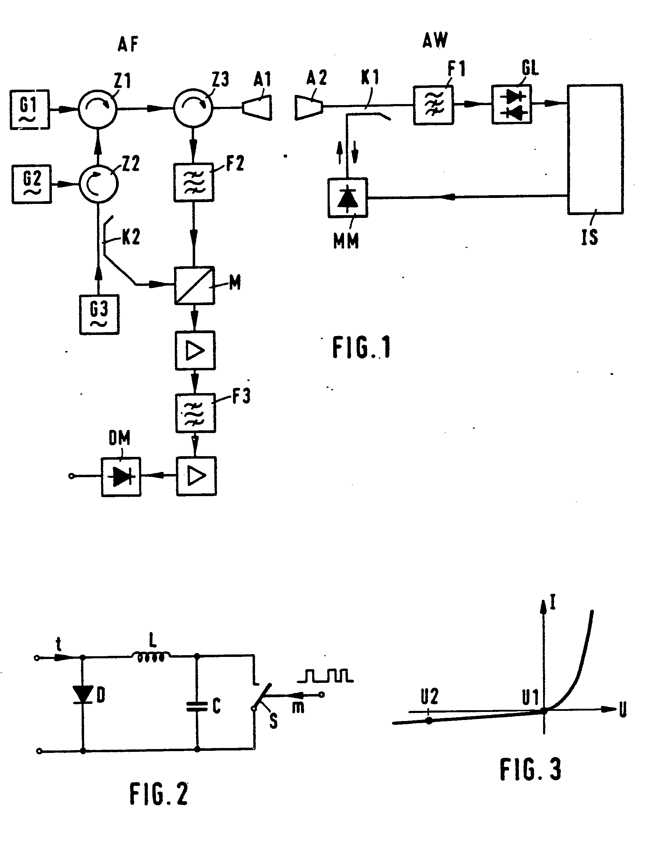

Das in der Fig. 1 dargestellte Informationsübertragungssystem besteht aus einer Abfrageeinheit AF und einer Antworteinheit AW.

In der Abfrageeinheit AF sind über drei Zirkulatoren Z1, Z2 und Z3 drei die Trägersignale mit den Frequenzen $f_1$, $f_2$ und $f_3$ erzeugende Generatoren G1, G2 und G3 an eine Antenne A1 geschaltet. Diese Antenne, strahlt gleichzeitig die drei Trägersignale ab. Die Frequenzen $f_1$, $f_2$, $f_3$ der drei Trägersignale sind so gewählt, daß sie in den Übertragungsfrequenzbereich eines Hohlleiters fallen, der in Gestalt eines Horns als Antenne A1 dient.

Den gleichen Übertragungsfrequenzbereich wie die Hornantenne A1 besitzt die Hornantenne A2 der Antworteinheit AW, welche beim passieren der Abfrageeinheit AF die drei Trägersignale der Frequenz $f_1$, $f_2$ und $f_3$ empfängt. Ein Koppler K1 hinter der Antenne A2 in der Antworteinheit koppelt aus den empfangenen Trägersignalen einen größeren Energieanteil ($\approx$90%) aus, der dann von einem Gleichrichter GL gleichgerichtet und als Betriebsenergie den Schaltungselementen in einem Informationsspeicher IS zugeführt wird. Ein dem Gleichrichter vorgeschaltetes Filter F1 unterdrückt unerwünschte, an den Gleichrichterdioden entstehende Intermodulationsprodukte.

Der restliche Energieanteil der drei Trägersignale gelangt an einen Mischer MM, der aus allen

Trägersignalen der Frequenzen $f_1$, $f_2$, $f_3$ das Mischprodukt mit den Frequenzen

$$f_1^* = f_1 + f_2 - f_3,$$

$$f_2^* = f_1 + f_3 - f_2$$

und

$$f_3^* = f_2 + f_1$$

bildet. Diese Frequenzen des Mischprodukts liegen sehr dicht bei den Frequenzen der drei Trägersignale, so daß auch sie wie die Trägerfrequenzen im Übertragungsfrequenzbereich der Hornantennen A1 und A2 liegen. Mit einer einzigen Hornantenne A1 der Abfrageeinheit AF bzw. einer Hornantenne A2 der Antworteinheit AW können als sowohl die drei Trägersignale ausgesendet bzw. empfangen als auch ihr Mischprodukt empfangen bzw. ausgesendet werden.

Als Beispiel sei angenommen, daß die drei Trägersignale bei den Frequenzen $f_1 = 9{,}2$ GHz, $f_2 = 9{,}3$ GHz und $f_3 = 9{,}5$ GHz liegen. Für die Frequenzen des Mischprodukts ergibt sich dann:

$$f_1^* = f_1 + f_2 - f_3 = 9{,}0 \text{ GHz}$$

$$f_2^* = f_1 + f_3 - f_2 = 9{,}4 \text{ GHz}$$

$$f_3^* = f_2 + f_3 - f_1 = 9{,}6 \text{ GHz}$$

Dieses Beispiel macht deutlich, daß die Frequenzen des Mischprodukts sehr dicht bei den Frequenzen der drei Trägersignale liegen.

Man wählt zweckmäßigerweise die Frequenz $f_1^*$ des Mischprodukts, die unterhalb der drei Trägerfrequenzen $f_1$, $f_2$, $f_3$ liegt, weil diese Frequenz filtertechnisch einfacher selektiert werden kann. So kann das Filter F1 vor dem Gleichrichter GL als Hochpaßfilter ausgeführt sein. Ein Hochpaßfilter läßt sich nämlich einfach durch einen unterhalb seiner Grenzfrequenz betriebenen Hohlleiter realisieren, der an den Schlund der Hornantenne A2 angesetzt ist. Diese Hochpaßfilter sorgt dafür, daß ein vom Gleichrichter GL erzeugtes Intermodulationsprodukt der Frequenz $f_1^*$ nicht zur Antenne A2 gelangt und abgestrahlt wird. Es soll nämlich das mit der im Informationsspeicher IS abgelegten Information modulierte, im Mischer MM gebildete Modulationsprodukt der Frequenz $f_1^*$ ausgesendet werden.

Der Informationsspeicher IS ist z.B. mit ERPROM's oder RAM's ausgerüstet. Auf die für die Speicherelemente notwendigen, dem Fachmann geläufigen Taktsteuerungs- und Adressierschaltungen soll hier nicht näher eingegangen werden. Die Information, die in dem Speicher abgelegt werden soll kann der Antworteinheit über Funk von einer Zentraleinheit aus zugeführt werden. Auch wäre eine manuelle Eingabe der Information in den Speicher über eine an der Antworteinheit installierte Tastatur denkbar. Zudem könnte die in dem Speicher abgelegte Information über eine optische Anzeige am Antwortgerät sichtbar gemacht werden. Leigt nun nach einer kurzen Einschwingzeit an dem Informationsspeicher die von den Trägersignalen abgeleitete Vorspannung an, so beginnt der Auslesevorgang des Speichers. Mit dem Informationssignal, welches als Binärsignal die Pegelzustände "0" und "1" hat, wird das im Mischer MM erzeugte Mischprodukt amplitudenmoduliert und das modulierte Mischprodukt über die Antenne A2 zur Abfrageeinheit AF ausgesendet.

Die Fig. 2 zeigt eine Schaltung, die auf sehr einfache Weise einen Mischer und einen Amplitudenmodulator vereinigt. Sie enthält ein Bauelement mit einer nichtlinearen Kennlinie, eine Diode D, der die drei Trägersignale t zugeführt werden. Die Induktivität L und die Kapazität C, mit der die Diode D beschaltet ist, dienen dazu die Gleichvorspannung der Diode von den Hochfrequenzsignalen zu trennen. Ein an den Mischer angeschlossener Schalter S, der zweckmäßigerweise ein elektronischer Schalter, z.B. ein Feldeffekttransistor ist, wird von dem als Modulationssignal m dienenden Informationssignal aus dem Informationsspeicher IS gesteuert. Das entsprechend dem Pegel "0" oder "1" des Modulationssignals m erfolgende Öffnen oder Schließen des Schalters S bewirkt eine Arbeitspunktverschiebung auf der nichtlinearen Kennlinie der Mischerdiode D. Ist der Schalter S geschlossen, so beträgt die Diodenvorspannung 0V. Bie einer Diodenvorspannung U1=0V liegt der Arbeitspunkt der Mischerdiode D, wie die Fig. 3 verdeutlicht, im nichtlinearen Bereich der Kennlinie, wo ein Mischvorgang an der Diode stattfindet. Ist der Schalter S geöffnet, entsteht eine negative Vorspannung U2 an der Mischerdiode D, bedingt durch die an ihr gleichgerichtete Trägersignalleistung. Bei der negativen Vorspannung U2 liegt der Arbeitspunkt im linearen Kennlinienbereich, wo kein Mischprodukt an der Mischerdiode gebildet wird. Hat als das Modulationssignal einen Pegel "1" wird ein Mischprodukt ausgestrahlt und hat es den Pegel "0" liegt kein Mischprodukt vor. Der Vorteil der beschriebenen Mischer- und Modulatorschaltungschaltung ist, daß sie ohne Einprägen einer eigenen Diodenvorspannung betrieben werden kann.

Das von der Abfrageeinheit AF empfangene, modulierte Mischprodukt wird von dem Zirkulator Z3 in einen Demodulationszweig eingekoppelt, der ein Filter F2, einen Mischer M, ein Filter F3 und einen Amplitudendemodulator DM enthält.

Das Filter F2 läßt nur das modulierte Mischprodukt an den nachfolgenden Micher M durch und unterdrückt die drei Trägersignale, die wegen einer nur endlich großen Entkopplung der Zirkulatoren auch mit in den Demodulationszweig eingekoppelt werden. Diese drei Trägersignale wurden sonst an dem Mischer M störende Mischprodukte hervorrufen.

Der Mischer M setzt das modulierte Mischprodukt mit Hilfe eines Oszillatorsignals z.B. der Frequenz $f_3$, das von einem Koppler K2 hinter dem Generator G3 abgekoppelt wird, in die Zwischenfrequenzebene um. Das Filter F3 in der Zwischenfrequenzebene selektiert eines der modulierten Signale aus dem am Mischer M entstandenen Mischprodukt heraus. Dieses eine Signal gelangt zum Demodulator DM, der daraus die Information der Antworteinheit AW zurückgewinnt.

**Patentansprüche**

1. Informationsübertragungssystem, bestehend aus einer Abfrageeinheit und einer Antworteinheit, wobei die Abfrageeinheit Trägersignale aussendet, welche die Antworteinheit, wenn sie die Abfrageeinheit passiert, empfängt, frequenzmäßig mischt und das Mischprodukt nach Modulation mit der in der Antworteinheit abgespeicherten Inforamtion wieder an die Abfrageeinheit zurücksendet, die das modulierte Mischprodukt empfängt und demoduliert, dadurch gekennzeichnet, daß die Abfrageeinheit (AF) mindestens drei Trägersignale aussendet, die im Übertragungsfrequenzband eines als Antenne in der Antworteinheit dienden Hohlleiters liegen, und daß ein Mischer (MM) in der Antworteinheit (AW) ein sich aus all diesen Trägersignalen zusammensetzendes Mischprodukt bildet.

2. Informationsübertragungssystem nach einem der vorhergehenden Ansprüche, dadurch gekennzeichnet, daß in der Antworteinheit (AW) eine Abspaltung eines Energieanteils der empfangenen Trägersignale erfolgt, der als Betriebsenergie für die Antworteinheit ausgenutzt wird.

3. Informationsübertragungssystem nach einem der vorhergehenden Ansprüche, dadurch gekennzeichnet, daß die Antworteinheit (AW) einen Gleichrichter (GL) für die aus den empfangenen Trägersignalen ausgekoppelten Signalanteile enthält und daß dem Gleichrichter ein Filter (F1) zum Unterdrücken der an den Gleichrichterdioden entstehenden Intermodulationsprodukte vorgeschaltet ist.

4. Informationsübertragungssystem, nach einem der vorhergehenden Ansprüche, dadurch gekennzeichnet, daß ein von der in der Antworteinheit (AW) abgespeicherten Information gesteuerter Schalter (S) die durch Gleichrichtung der Trägersignale entstandene Vorspannung an der Diode (D) des Mischers (MM) dem Pegel des Informationssignals entsprechend entweder kurzschließt und damit den Arbeitspunkt der Diode in ihren nichtlinearen Kennlinienbereich verschiebt, wo ein Mischvorgang stattfindet, oder nicht kurzschließt und damit den Arbeitspunkt in den linearen Kennlinienbereich verschiebt, wo kein Mischvorgang stattfindet.

**Revendications**

1. Système de transmission d'informations, comprenant une unité d'interrogation et une unité de réponse, dont l'unité d'interrogation émet des signaux porteurs, lesquels sont reçus par l'unité de réponse lorsque celle-ci passe devant l'unité d'interrogation, et soumis par l'unité de réponse à un mélange fréquentiel, le produit du mélange, après avoir été modulé par l'information mémorisée dans l'unité de réponse, étant renvoyé de nouveau par celle-ci à l'unité d'interrogation, laquelle reçoit le produit du mélange modulé et le soumet à une démodulation, caractérisé en ce que l'unité d'interrogation (AF) émet au moins trois signaux porteurs qui sont compris dans la bande de fréquences de transmission d'un guide d'ondes servant d'antenne dans l'unité de réponse, et qu'un mélangeur (MM) dans l'unité de réponse (AW) forme un produit de mélange qui se compose de tous ces signaux porteurs.

2. Système selon la revendication 1, caractérisé en ce qu'une partie de l'énergie des signaux porteurs reçus est séparée dans l'unité de réponse (AW) et est utilisée en tant qu'énergie pour le fonctionnement de cette unité.

3. Système selon une des revendications précédentes, caractérisé en ce que l'unité de réponse (AW) contient un redresseur (GL) pour les fractions de signaux découplées des signaux porteurs reçus et que ce redresseur est précédé d'un filtre (F1) pour supprimer les produits d'intermodulation formés sur les diodes de redressement.

4. Système selon une des revendications précédentes, caractérisé en ce qu'un interrupteur (S), commandé par l'information mémorisée dans l'unité de réponse (AW), provoque la mise en court-circuit de la tension de polarisation formée sur la diode (D) du mélangeur (MM) par le redressement des signaux porteurs, entraînant ainsi le décalage du point de fonctionnement de la diode dans la partie non-linéaire de sa caractéristique, où a lieu un processus de mélange, ou ne provoque pas une telle mise en court-circuit, suivant le niveau du signal d'information, entraînant ainsi le décalage du point de fonctionnement dans la partie linéaire de la caractéristique, où ne se produit pas de processus de mélange.

**Claims**

1. An information transmission system, comprising an interrogator unit and a response unit, where the interrogator unit emits carrier signals which the response unit receives when it passes the interrogator unit, mixes their frequencies and retransmits the mixture product after modulation with the information stored in the response unit, which receives the mixture product and demodulates it, characterized in that the interrogation unit (AF) emits at least three carrier signals which are located in the transmission frequency band of a wave guide used as an antenna in the response unit, and in that a mixer (MM) in the response unit (AW) forms a mixture product consisting of all these carrier signals.

2. An information transmission system in accordance with one of the preceding claims, characterized in that in the response unit (AW) a part of the power of the received carrier signal is split off and is used as operating power for the response unit.

3. An information transmission system in accordance with one of the preceding claims, characterized in that the response unit (AW) contains a rectifier (GL) for the parts of the signal split off from the received carrier signals and in that a filter (F1) is placed upstream of the rectifier for suppressing the intermodulation products being created at the rectifier diodes.

4. An information transmission system in accordance with one of the preceding claims, characterized in that a switch (S), controlled by the information stored in the response unit (AW), either short-circuits, in relation to the level of the information signal, the bias voltage generated by rectification of the carrier signals at the diode (D) of the mixer (MM) and thus displaces the operating point of the diode into the area of its nonlinear characteristic, where a mixing process takes place, or does not short-circuit it and thus displaces the operating point into the area of the linear characteristic where no mixing process occurs.

FIG.1

FIG.2

FIG.3